# DEMANDE DE BREVET EUROPEEN

(11) **EP 2 045 636 A1**
(43) Date de publication de la demande: **08.04.2009**
(21) Numéro de dépôt: 08165914.6
(22) Date de dépôt: 06.10.2008
(51) Int. Cl.: G02B 6/44

(54) **Prise optique pour reseau de telecommunication**

(30) Priorité: 04.10.2007 FR 0758054
(71) Demandeur: Nexans, 75008 Paris (FR)
(72) Inventeur: APERE, Rodolphe, 78570 ANDRESY (FR)
(74) Mandataire: Lenne, Laurence

(57) **Abrégé**

L'invention concerne une prise optique (1) pour réseau de télécommunication comportant un boîtier constitué d'au moins un socle (2A) et un couvercle (2B), ce socle comportant une ouverture pour l'atteinte d'un câble de données et supportant un raccord (5) pour la connexion d'une fibre optique de ce câble de données avec une fibre optique externe (FOE) au moyen d'une fiche de connexion (Fi).

Selon l'invention, ledit raccord (5) est monté translatable dans le boîtier, d'une première position où sa face de connexion d'une fibre externe est espacé d'une distance de ladite fenêtre (6A) à l'intérieur dudit boîtier, à une seconde position où il est à proximité de ladite fenêtre (6A) à l'intérieur dudit boîtier.

## Description

L'invention concerne une prise optique pour réseau de télécommunication, en général murale, de type FTTH (en anglais « Fiber To The Home »). Ce type de prise est installé dans les habitations, afin de permettre le raccordement d'une fibre optique de connexion de matériels de télécommunication ou équivalent.

Une telle prise comporte un boîtier constitué d'un socle et d'un couvercle. Le socle supporte un enroulement d'une sur longueur de fibre optiques gainée ou nue, dont une extrémité provient d'un câble de transfert de données débouchant d'une gaine technique incluse dans le mur et dont l'autre extrémité est connectée à un raccord solidaire du socle et sur lequel peut être connectée par l'extérieur de la prise, la fiche de la fibre optique du matériel de l'habitant ou utilisateur.

Il peut être envisagé de disposer ce raccord de façon fixe et proéminente à l'extérieur du boîtier et de le protéger par un capuchon amovible. En effet, un tel raccord doit être protégé des poussières et présenter une sécurité contre la possibilité de regarder le raccord directement dans l'axe de la fibre optique, ce qui serait dangereux pour l'oeil d'un utilisateur imprudent.

Cependant, un tel agencement pose plusieurs problèmes techniques.

Le capuchon est enlevé pour la connexion d'une fibre optique de matériel et il peut aisément être perdu ou oublié, lors de la déconnexion de ce matériel, par exemple lors d'un déménagement. La prise ne présente alors plus cette sécurité.

Un tel raccord proéminent de la prise peut facilement être endommagé par un effort tendant à le cisailler, par exemple par un coup de balai.

Une telle prise n'est pas esthétique. En effet, un tel raccord optique est de couleur standardisée, verte ou bleue, et, faisant saillie de la prise, il forme une tâche de couleur préjudiciable à la décoration de l'habitation ou équivalent.

De plus, en position connectée, la fiche de connexion externe connectée est également externe au boîtier. Elle est donc visible, ce qui est défavorable à un bon effet esthétique, cette fiche étant également de couleur standardisée.

Enfin, raccord et fiche sont accessibles à une personne non avertie.

Le document de brevet WO 2004/031823 décrit une telle prise dont le raccord est monté de façon interne au boîtier.

Par rapport à ce document, l'objet de l'invention est de faciliter la déconnexion de la fiche de connexion.

L'invention résout ces problèmes et pour ce faire elle propose une prise optique pour réseau de télécommunication comportant un boîtier constitué d'au moins un socle et un couvercle, ce socle comportant une ouverture pour l'atteinte d'un câble de données et supportant un raccord pour la connexion d'une fibre optique de ce câble de données avec une fibre optique externe au moyen d'une fiche de connexion, caractérisée en ce que ledit raccord est monté translatable dans le boîtier, d'une première position où sa face de connexion d'une fibre externe est espacé d'une distance de ladite fenêtre à l'intérieur dudit boîtier, à une seconde position où il est à proximité de ladite fenêtre à l'intérieur dudit boîtier.

De préférence, ladite distance correspond sensiblement à la longueur de ladite fiche de connexion.

Avantageusement, elle comporte un bouton de translation du raccord de ladite première position vers ladite seconde position au moyen d'un chariot support du raccord, ce bouton étant externe au boîtier.

Elle peut comporter un ressort de rappel dans ladite première position.

Ledit chariot et ledit bouton peuvent former une seule pièce.

De préférence, la prise comporte deux dites fenêtres symétriques par rapport à un plan longitudinal du boîtier et en ce que ledit chariot est symétrique par rapport à un plan perpendiculaire à ce plan longitudinal, en position montée.

Grâce à cette caractéristique, selon le sens d'arrivée de la fibre optique en amont du raccord, et en fait en général selon son sens d'enroulement, le raccord peut être monté à droite ou à gauche dudit axe longitudinal, avec le même chariot.

Avantageusement, ladite fenêtre d'accès ou lesdites fenêtres d'accès est (sont) fermée(s) par un volet relié au boîtier par des pivots perpendiculaires audit plan longitudinal.

Ledit volet peut être associé à une languette élastique assurant son maintien en position ouverte et sa libération par gravité en position de fermeture.

Ledit socle peut comporter un agencement d'enroulement circulaire d'une sur longueur de fibre optique.

Cet agencement circulaire assure une réduction d'encombrement de la zone d'enroulement et permet donc d'intégrer le raccord dans le boîtier de la prise, sans augmentation de l'encombrement de ce dernier.

Ledit socle peut comporter un agencement de support d'épissures de fibres optiques.

La prise peut comporter un dispositif de connexion arrière à un coffrage d'arrivée dudit câble de données.

De préférence, la face arrière du dit socle comporte un agencement de lovage d'une sur longueur du dit câble de données.

La prise peut être mixte et comporter également un raccord RJ45.

L'invention est décrite ci-après plus en détail à l'aide de figures ne représentant qu'un mode de réalisation préféré de l'invention.

Les figures 1 et 2 sont des vues en perspective d'une prise conforme à l'invention, en position connectée et en position de déconnexion.

Les figures 3A et 3B sont des vues en perspective d'une telle prise équipée, dont le couvercle est enlevé, en position non connectée ; la figure 3B est une vue de détail de la figure 3A.

Les figures 4 et 5 sont des vues en perspective d'une telle prise vide, dont le couvercle est enlevé, en position connectée correspondante à la figure 1 et en position de déconnexion correspondante à la figure 2.

La figure 6 est une vue de dessus et de détail de la figure 5.

Les figures 7A et 7B sont des vues en perspective de détail d'une telle prise.

La figure 8 est une vue en perspective de détail d'une telle prise.

Les figures 9A et 9B sont des vues en perspective éclatée d'une telle prise, vue de l'avant et vue de l'arrière, en position de déconnexion correspondante à la figure 2.

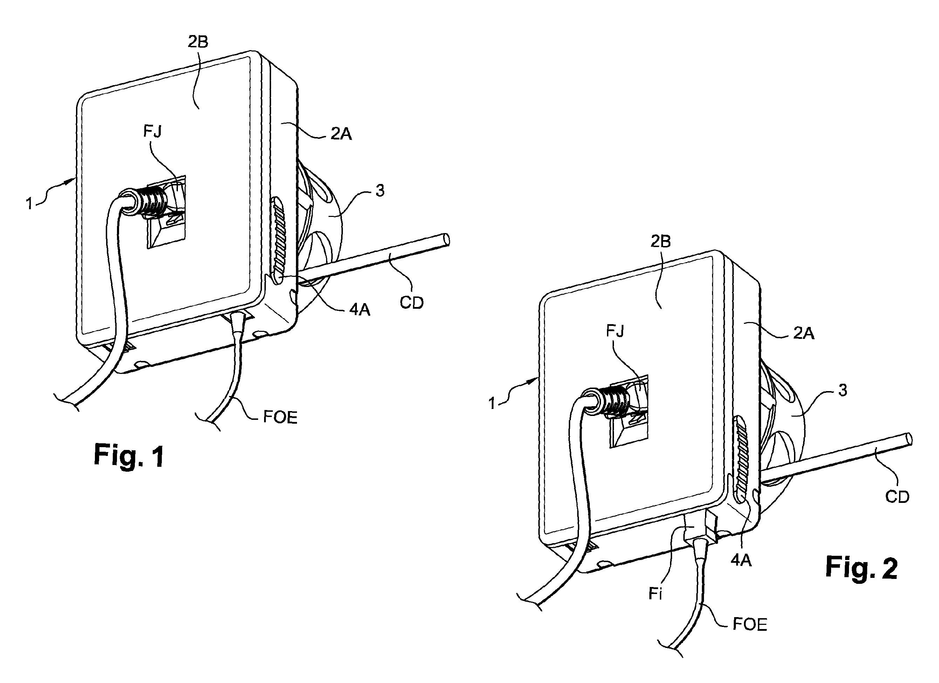

Comme représentée sur les figures 1 et 2, la prise optique pour réseau de télécommunication 1 comporte un boîtier constitué d'un socle 2A et un couvercle 2B. Cette prise est destinée au raccordement d'une fibre optique d'un câble de données CD avec une fibre optique externe FOE gainée au moyen d'une fiche de connexion Fi. Cette prise 1 est mixte et comporte également un raccord RJ45 sur lequel est connectée une fiche correspondante FJ. La prise 1 comporte également un dispositif de connexion arrière à un coffrage de d'arrivée 3 du câble de données.

Sur la figure 1, la prise est représentée en position connectée de la fibre optique FOE. Raccord et fiche de connexion Fi sont alors invisibles, car internes au boîtier.

Sur la figure 2, la prise est représentée en position de déconnexion de la fibre optique FOE, cette position étant obtenue par translation d'un bouton poussoir 4A. La fiche de connexion Fi est alors externe au boîtier, afin de permettre sa déconnexion du raccord interne au boîtier.

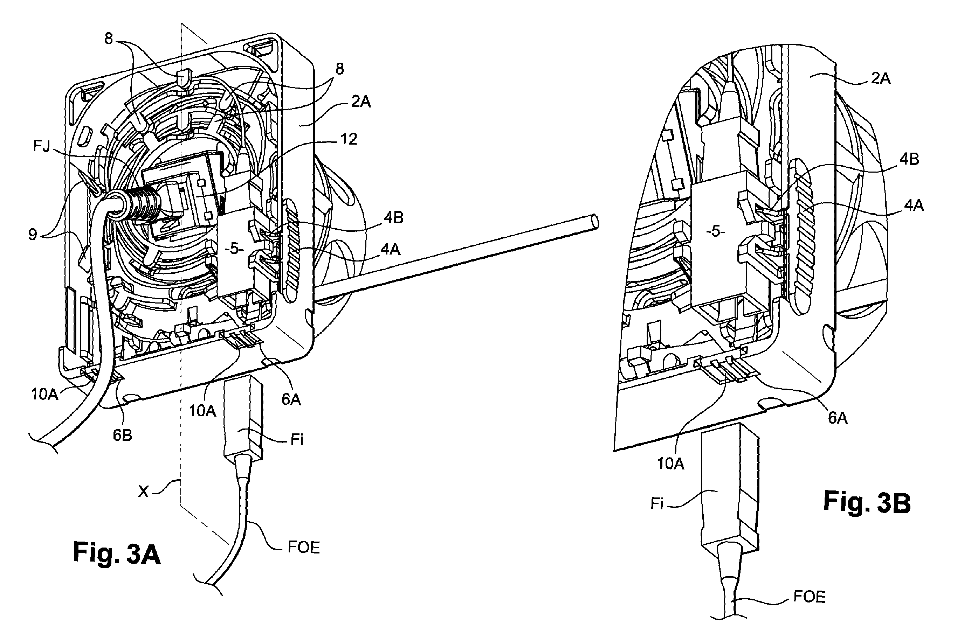

Les figures 3A et 3B sont des vues en perspective d'une telle prise équipée, dont le couvercle est enlevé, en position non connectée.

Le socle 2A comporte une ouverture pour l'atteinte d'un câble de données et supporte un raccord 5 pour la connexion d'une fibre optique de ce câble de données avec une fibre optique externe FOE au moyen d'une fiche de connexion Fi. Le raccord 5 est monté de façon interne au boîtier, en vis-à-vis d'une fenêtre d'accès 6A fermée par un volet 10A relié au socle 2A du boîtier par une paire de pivots perpendiculaires au plan longitudinal X de la prise.

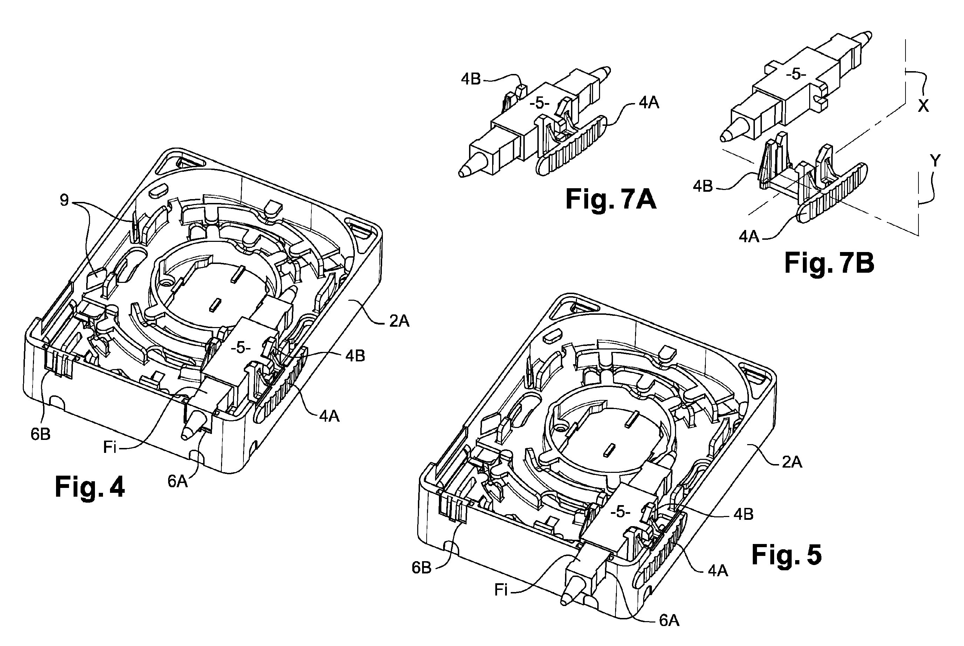

Le raccord 5 est monté translatable dans le boîtier, d'une première position où sa face de connexion d'une fibre externe est espacé d'une distance de la fenêtre 6A à l'intérieur du boîtier, comme illustré sur ces figures 3A et 3B, à une seconde position où il est à proximité de la fenêtre à l'intérieur du boîtier, comme illustré sur les figures 2 et 5. Cette distance correspond sensiblement à la longueur de la fiche de connexion Fi.

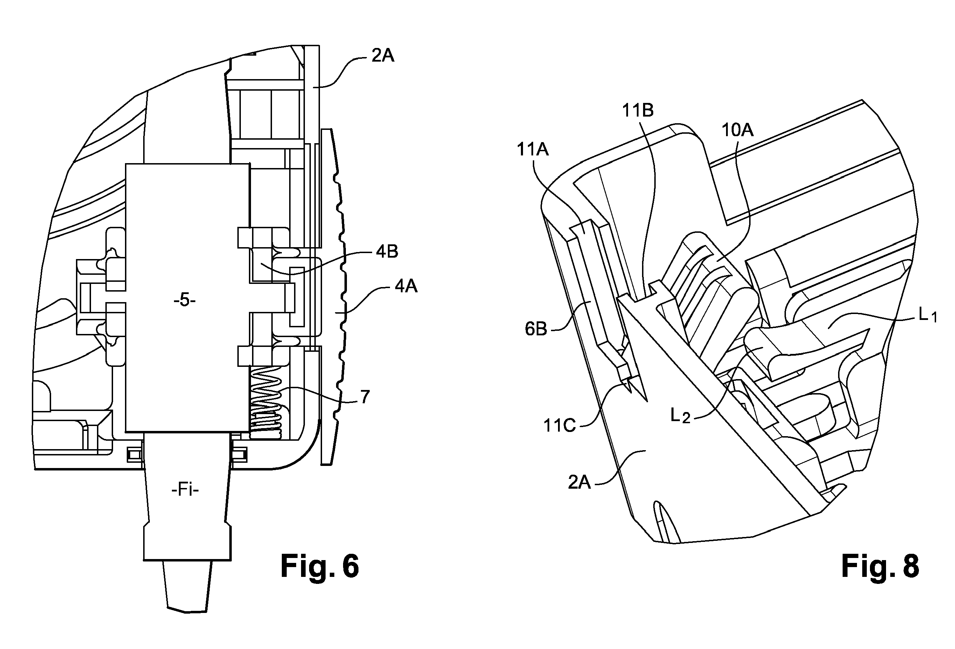

La prise comporte un bouton 4 de translation du raccord 5 de la première position vers la seconde position, comme il a été déjà illustré sur les figures 1 et 2, au moyen d'un chariot 4B support du raccord, ce bouton 4A étant externe au boîtier. Le chariot 4B et le bouton 4A forment une seule pièce, comme il sera décrit plus en détail, plus loin. La prise comporte un ressort de rappel 7 dans la première position, ce ressort étant visible sur la figure 6. Il est monté en appui entre le chariot 4B et la face interne de la paroi inférieure du socle 2A.

Le socle comporte sur son fond un agencement d'enroulement circulaire 8 d'une sur longueur de fibre optique, ainsi qu'un agencement de support d'épissures 9 de fibres optiques.

Comme illustré sur la figure 3A, une fibre optique externe FOE est destinée à être connectée. Elle est alors amenée dans la fenêtre 6A, y pousse le volet 10A vers l'intérieur du boîtier et est introduite jusqu'à enfichage dans le raccord 5, comme illustré sur les figures 1 et 4.

Pour permettre la déconnexion de cette fibre Fi, le bouton 4A est manoeuvré vers le bas, à l'encontre du ressort de rappel 7, et le chariot 4B amène la fiche en position saisissable, externe au boîtier, comme illustré sur les figures 2, 5 et 6.

Une fois la fiche Fi déconnectée, le relâchement du bouton 4A libère le ressort de rappel 7 qui ramène le chariot 4B et le raccord 5 dans la première position illustrée sur les figures 3A et 3B. Le volet 10A est alors également libéré et revient fermer la fenêtre 6A par gravité.

Les figures 7A et 7B représentent plus précisément la pièce unique constituant le bouton 4A et le chariot 4B.

Cette pièce est symétrique par rapport à un plan Y perpendiculaire au plan longitudinal X, en position montée. Sur cette pièce, est logé et maintenu par clippage le raccord 5.

Cet agencement symétrique du chariot 4B et du bouton poussoir 4A permet une double possibilité de montage du raccord 5 dans le boîtier.

Dans ce but, la paroi inférieure du boîtier de la prise comporte deux fenêtres d'accès 6A et 6B symétriques par rapport au plan longitudinal X du boîtier. Le raccord 5 peut donc être installé à l'aide d'une même pièce de chariot 4B et de bouton 4A, en vis-à-vis de l'une ou de l'autre de ces fenêtres. Sur les figures, le raccord est représenté installé en vis-à-vis de la fenêtre de droite 6A.

Ces deux fenêtres 6A et 6B sont fermées respectivement par un volet tel que 10 A représenté sur la figure 8, en position d'ouverture. Ce volet est monté pivotant au moyen d'une paire de pivots montés respectivement dans une rainure 11A et 11B agencée sur les bords latéraux de la fenêtre correspondante.

Ces fenêtres 6A, 6B comportent une forme correspondante à la forme externe de la fiche Fi, à savoir comportent une encoche 11C assurant le détrompage.

Le socle 2A comporte une languette élastique L1 associée à chaque volet 10A et destinée à maintenir le volet ouvert, lorsqu'une fiche Fi est connectée, et à libérer le volet par gravité, lorsque la fiche est enlevée. Cette languette comporte une extrémité à bout arrondi L2 sur lequel le volet s'appuie lors de la connexion de la fiche. Il y vient alors en butée et contraint la languette élastique L1. Lorsque la fiche externe est enlevée, la languette exerce une pression sur la surface inclinée du volet, la languette L1 libérée des contraintes revient en position initiale, repoussant le volet jusqu'à une position instable, de sorte que la volet retombe par gravité et ferme la fenêtre d'accès correspondante.

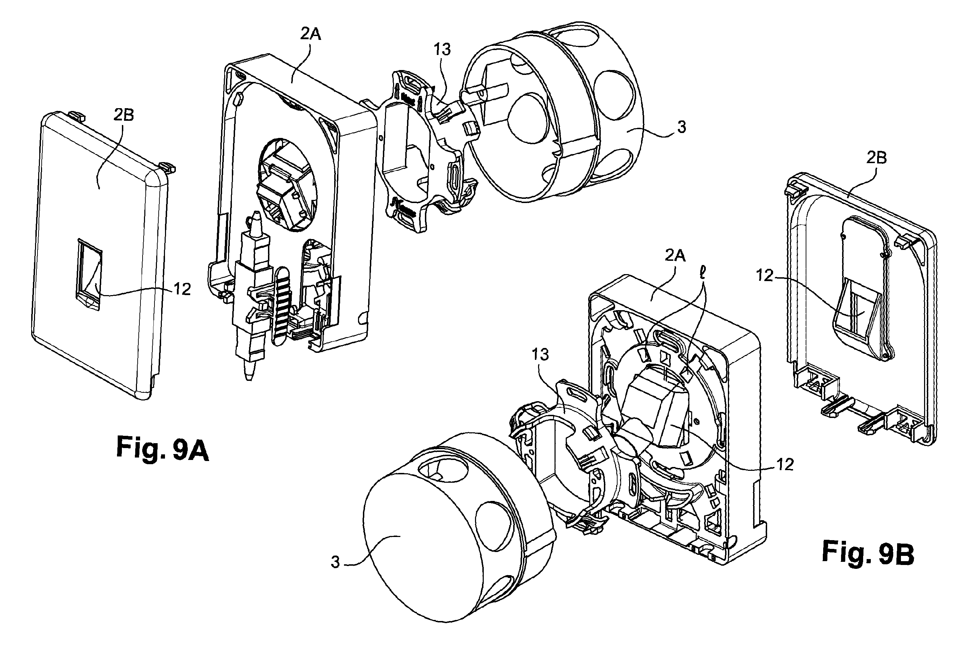

L'ensemble des pièces essentielles constitutives de la prise est représenté en vue éclatée sur les figures 9A et 9B.

Les pièces constitutives de l'avant du socle 2A ont déjà été précisément décrites plus haut.

La face arrière du socle 2A comporte un agencement de lovage d'une sur longueur du câble de données, en amont de la prise. Cet agencement de lovage est constitué de languettes 1 disposées sur la face arrière du socle.

Ce socle est fermé par le couvercle 2B par clippage, ce couvercle étant représenté en position fermée sur les figures 1 et 2. Dans le cas d'une prise mixte, le couvercle 2B comporte un passage 12 destiné à l'introduction d'une fiche RJ45. Avantageusement, ce passage 12 est constitué d'un canal à surface inférieure courbe et inclinée vers le haut, afin de faciliter par guidage la mise en place d'une fiche RJ45 correspondante destinée à être connectée au raccord RJ45 12 porté par le socle 2A.

A cette prise sont également associés un coffrage d'arrivée 3 du câble de données, destiné à être disposé dans le mur, et un dispositif de connexion arrière 13 du socle 2A à ce coffrage, qui est destiné à être clippé sur la face arrière du socle 2A.

Lorsqu'un tel coffrage d'arrivée est utilisé et scellé dans un mur, une sur longueur de câble de données CD peut être enroulé directement autour du dispositif de connexion 13, dont une partie cylindrique forme alors tambour pour cette sur longueur. Dans ce cas, l'agencement de languettes l formé sur la face arrière du socle n'est pas utilisé.

Les agencements de lovage ou d'enroulement sont bien sûr dimensionnés pour assurer un rayon de courbure supérieur ou égal au rayon minimal de courbure admissible du câble de données ou de la fibre optique gainée ou nue.

## Revendications

1. Prise optique (1) pour réseau de télécommunication comportant un boîtier constitué d'au moins un socle (2A) et un couvercle (2B), ce socle comportant une ouverture pour l'atteinte d'un câble de données et supportant un raccord (5) pour la connexion d'une fibre optique de ce câble de données avec une fibre optique externe (FOE) au moyen d'une fiche de connexion (Fi), ce raccord (5) étant monté de façon interne au boîtier, en vis-à-vis d'une fenêtre d'accès (6A) fermée par au moins un volet (10A) relié au boîtier, de telle sorte que ladite fiche optique externe (Fi) est également interne au boîtier en position connectée au dit raccord, **caractérisée en ce que** ledit raccord (5) est monté translatable dans le boîtier, d'une première position où sa face de connexion d'une fibre externe est espacé d'une distance de ladite fenêtre (6A) à l'intérieur dudit boîtier, à une seconde position où il est à proximité de ladite fenêtre (6A) à l'intérieur dudit boîtier.

2. Prise selon la revendication précédente, **caractérisée** ladite distance correspond sensiblement à la longueur de ladite fiche de connexion (Fi).

3. Prise selon la revendication 1 ou 2, **caractérisée en ce qu'**elle comporte un bouton (4A) de translation du raccord (5) de ladite première position vers ladite seconde position au moyen d'un chariot support (4B) du raccord, ce bouton (4A) étant externe au boîtier.

4. Prise selon la revendication précédente, **caractérisée en ce qu'**elle comporte un ressort de rappel (7) dans ladite première position.

5. Prise selon la revendication 3 ou 4, **caractérisée en ce que** ledit chariot (4B) et ledit bouton (4A) forme une seule pièce.

6. Prise selon l'une des revendications 3 à 5, **caractérisée en ce qu'**elle comporte deux dites fenêtres (6A, 6B) symétriques par rapport à un plan longitudinal (X) du boîtier et **en ce que** ledit chariot (4B) est symétrique par rapport à un plan perpendiculaire (Y) à ce plan longitudinal, en position montée.

7. Prise selon l'une des revendications précédentes, **caractérisée en ce que** ladite fenêtre d'accès ou lesdites fenêtres d'accès est (sont) fermée(s) par un volet (10A, 10B) reliés au boîtier par des pivots perpendiculaires audit plan longitudinal (X).

8. Prise selon la revendication précédente, **caractérisée en ce que** ledit volet (10A, 10B) est associé à une languette élastique (L1) assurant son maintien en position ouverte et sa libération par gravité en position de fermeture.

9. Prise selon l'une des revendications précédentes, **caractérisée en ce que** ledit socle comporte un agencement d'enroulement circulaire (8) d'une sur longueur de fibre optique.

10. Prise selon l'une des revendications précédentes, **caractérisée en ce que** ledit socle comporte un agencement de support d'épissures (9) de fibres optiques.

11. Prise selon l'une des revendications précédentes, **caractérisée en ce qu'**elle comporte un dispositif de connexion arrière (13) à un coffrage (3) d'arrivée dudit câble de données.

12. Prise selon l'une des revendications précédentes, **caractérisé en ce que** la face arrière du dit socle (2A) comporte un agencement de lovage d'une sur longueur du dit câble de données.

13. Prise selon l'une des revendications précédentes, **caractérisée en ce qu'**elle est mixte et comporte également un raccord RJ45 (12).
